# DEMANDE DE BREVET EUROPEEN

(11) **EP 1 098 525 A2**
(43) Date de publication de la demande: **09.05.2001**
(21) Numéro de dépôt: 00410136.6
(22) Date de dépôt: 02.11.2000
(51) Int. Cl.: H04N 7/24

(54) **Décodeur MPEG utilisant une mémoire partagée**

(30) Priorité: 03.11.1999 FR 9914010
(71) Demandeur: STMicroelectronics SA, 94250 Gentilly Cedex (FR)
(72) Inventeur: Moutin, Jean-Michel, 38130 Echirolles (FR); Marty, Pierre, 38180 Seyssins (FR)
(74) Mandataire: de Beaumont, Michel

(57) **Abrégé**

L'invention concerne un circuit (16) comprenant un microprocesseur (6), un décodeur MPEG (4) pour décoder une suite d'images et une mémoire (12) commune au microprocesseur et au décodeur, qui comprend également un circuit (18) d'évaluation du retard du décodeur, un circuit de commande (14) pour, si le retard du décodeur est supérieur à un niveau prédéterminé, donner au décodeur la priorité d'accès à la mémoire sinon, donner au microprocesseur la priorité d'accès à la mémoire.

## Description

La présente invention concerne les circuits de décompression de séquences d'images codées selon la norme MPEG, et plus particulièrement un circuit comprenant un microprocesseur et un décodeur MPEG qui utilisent une mémoire commune.

La norme de codage MPEG permet de mémoriser les images d'une séquence d'images numériques dans un espace mémoire réduit. Une séquence d'images codée selon la norme MPEG peut être décodée par un décodeur MPEG. Un décodeur MPEG peut, pour le décodage d'une image d'une séquence, faire appel aux données de deux images adjacentes déjà décodées et conservées dans une mémoire tampon. La mémoire dans laquelle sont mémorisées les images codées et la mémoire tampon sont habituellement deux zones d'une même mémoire dans laquelle le décodeur MPEG peut venir lire et écrire. Un décodeur MPEG fait couramment partie d'un circuit qui comprend en outre un microprocesseur ayant notamment pour fonction de gérer les interfaces, les périphériques et les registres internes du circuit. Classiquement, le microprocesseur a lui aussi besoin pour son fonctionnement de lire et d'écrire dans une mémoire.

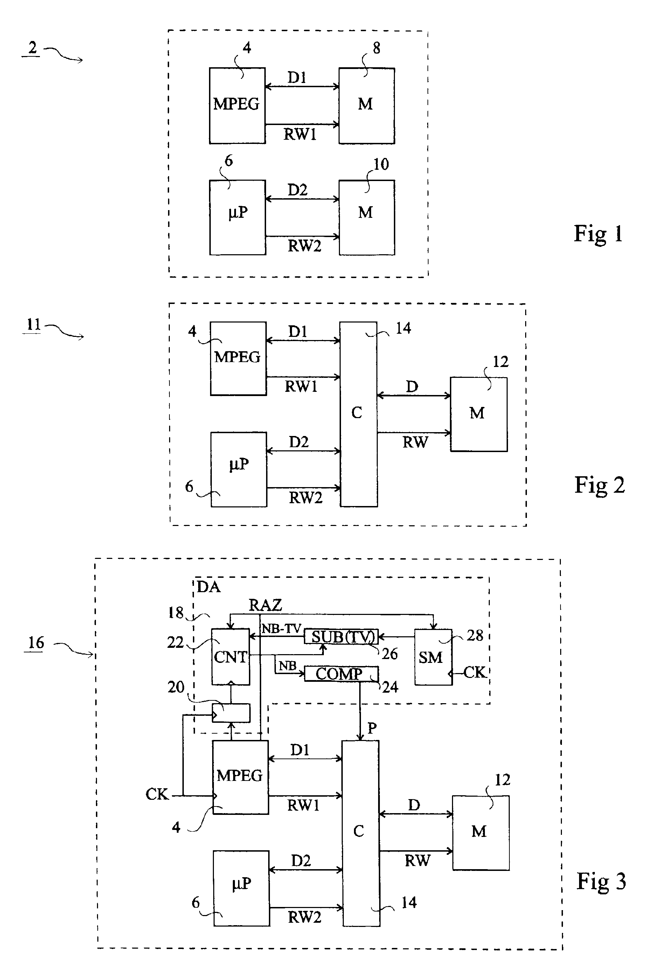

La figure 1 représente de manière très schématique un circuit 2 qui comprend un décodeur MPEG 4 et un microprocesseur 6, respectivement reliés à des mémoires 8 et 10. Le décodeur 4 échange des adresses et des données avec la mémoire 8 par l'intermédiaire d'un bus D1. Le décodeur 4 produit notamment un signal RW1 pour commander la mémoire 8 en lecture ou en écriture. Le microprocesseur échange des adresses et des données avec la mémoire 10 par l'intermédiaire d'un bus D2. Le microprocesseur 6 produit notamment un signal RW2 pour commander la mémoire 10 en lecture ou en écriture.

Une telle utilisation de deux mémoires distinctes accroît le coût du circuit. Ainsi, on a cherché à regrouper les mémoires 8 et 10 en une seule mémoire partagée par le décodeur et par le microprocesseur.

La figure 2 représente de manière très schématique un circuit 11 qui comprend un décodeur MPEG 4 et un microprocesseur 6, reliés à une mémoire 12 unique par des bus de données D1 et D2, par l'intermédiaire d'un circuit de commande 14. Le circuit de commande 14, connecté pour recevoir les commandes d'écriture/lecture RW1 et RW2 respectivement produites par le décodeur 4 et le microprocesseur 6, fournit un signal d'écriture/lecture RW à la mémoire 12. Le circuit de commande 14 est relié à la mémoire 12 par un bus D.

Dans un tel circuit cependant, des conflits d'accès à la mémoire 12 apparaissent lorsque le décodeur 4 et le microprocesseur 6 doivent accéder à la mémoire 12 en même temps. Le circuit de commande 14 doit donc être prévu pour donner la priorité d'accès au décodeur ou au microprocesseur. Lorsque le décodeur et le microprocesseur doivent tous deux effectuer un grand nombre d'accès mémoire, et si la priorité d'accès est donnée au microprocesseur, le décodeur reçoit un nombre insuffisant de données et il se met à accumuler du retard dans le décodage. Si la priorité d'accès est donnée au décodeur, le microprocesseur ne peut fonctionner à sa vitesse maximale et ses performances sont dégradées. Un retard trop fort du décodage des données entraîne un dysfonctionnement du circuit. Par exemple, lorsque les données décodées sont destinées à être affichées, une donnée décodée trop en retard ne pourra plus être affichée à temps, ce qui dégradera la qualité de l'affichage. Ainsi, une solution classique consiste à donner la priorité d'accès au décodeur, en acceptant que le microprocesseur ait un fonctionnement dégradé.

Un objet de la présente invention est de prévoir un moyen pour limiter la dégradation des performances du microprocesseur sans entraîner un dysfonctionnement du décodeur.

Pour atteindre cet objet, la présente invention prévoit un circuit de commande qui donne la priorité au microprocesseur tant que le décodeur n'a pas pris de retard, et qui, lorsque le décodeur a pris du retard, donne la priorité au décodeur jusqu'à ce que celui-ci ait rattrapé son retard ; et
la présente invention prévoit un moyen d'évaluer le retard pris par le décodeur.

Plus particulièrement, la présente invention prévoit un circuit comprenant un microprocesseur, un décodeur MPEG pour décoder une suite d'images et une mémoire commune au microprocesseur et au décodeur, qui comprend également un circuit d'évaluation du retard du décodeur, un circuit de commande pour, si le retard du décodeur est supérieur à un niveau prédéterminé, donner au décodeur la priorité d'accès à la mémoire, et sinon, donner au microprocesseur la priorité d'accès à la mémoire.

Selon un mode de réalisation de la présente invention, le circuit comprend une horloge, des moyens pour fixer une période de référence égale à un nombre déterminé de cycles d'horloge, des moyens pour fixer un seuil d'activité, et le circuit d'évaluation du retard du décodeur comprend un moyen pour déterminer pendant chaque cycle d'horloge si le décodeur est utilisé ou inutilisé, un compteur dont le contenu est incrémenté chaque fois que le décodeur est inutilisé pendant un cycle, un soustracteur qui, au début de chaque période de référence, retranche ledit seuil du contenu du compteur, et un comparateur pour vérifier que le contenu du compteur reste négatif, la sortie de ce comparateur étant fournie au circuit de commande.

Selon un mode de réalisation de la présente invention, le circuit comprend en outre des circuits supplémentaires qui utilisent la mémoire par l'intermédiaire du circuit de commande avec une activité prédéterminée, et le circuit de commande est prévu pour donner l'accès à la mémoire alternativement aux circuits supplémentaires puis au microprocesseur et au décodeur, l'accès à la mémoire par le microprocesseur et le décodeur étant réglé par la commande produite par le circuit d'évaluation.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente très schématiquement un circuit comportant un décodeur MPEG et un microprocesseur utilisant des mémoires non partagées ;
la figure 2, précédemment décrite, représente très schématiquement un circuit comprenant un décodeur MPEG et un microprocesseur utilisant une mémoire partagée ;
la figure 3 représente un circuit comportant un décodeur MPEG et un microprocesseur utilisant une mémoire partagée selon la présente invention ;
la figure 4 illustre le principe de fonctionnement du circuit d'évaluation de retard de la figure 3 ;
la figure 5 illustre le fonctionnement du circuit d'évaluation de retard de la figure 3, lorsque le décodeur prend un retard peu important ;
la figure 6 illustre le fonctionnement du circuit d'évaluation de retard de la figure 3, lorsque le décodeur prend un retard important ;
la figure 7 représente de manière très schématique une variante du circuit de la figure 3 ; et
la figure 8 illustre la répartition des plages d'accès dans le circuit de la figure 7.

La figure 3 représente très schématiquement un circuit 16 dans lequel de mêmes références représentent de mêmes éléments qu'en figure 2. Le circuit 16 comprend les mêmes éléments qu'en figure 2, et il comprend en outre un circuit 18 d'évaluation du retard du décodeur 4, qui fournit un signal de commande P au circuit de commande 14. Un signal d'horloge CK cadence le décodeur 4 et le circuit d'évaluation 18. Le circuit d'évaluation 18 comprend notamment un moyen 20 pour déterminer lors de chaque cycle d'horloge CK si le décodeur est utilisé ou inutilisé. Le moyen 20 cadence un compteur 22 dont le contenu NB signé est fourni à un comparateur de signe 24. La sortie du comparateur 24 est le signal P fourni au circuit de cade 14. Dans un état initial, le signal P est inactif et le circuit de commande 14 est prévu pour donner au microprocesseur 6 la priorité d'accès à la mémoire. Lorsque le contenu NB du compteur est positif, le signal P est activé et le circuit de commande 14 donne au décodeur 4 la priorité d'accès à la mémoire. Le circuit 18 comprend en outre un soustracteur 26 connecté pour retrancher une valeur seuil prédéterminée TV au contenu NB du compteur 22. Le circuit 18 comprend également une machine d'état 28 cadencée par l'horloge CK, et connectée pour commander le soustracteur 26. La machine d'état 28 et le compteur 22 sont connectés pour être réinitialisés au début du décodage de chaque image.

Classiquement, l'utilisation qui est faite des images décodées (par exemple leur affichage) impose au décodeur 4 un temps maximal prédéterminé pour décoder une image codée reçue sur le bus D1. Une image codée présente une taille fixe pour les images d'une séquence. La taille des images peut varier d'une séquence à l'autre. On définit pour le décodeur 4 une vitesse de fonctionnement seuil qui correspond au décodage optimal d'une image codée de taille donnée en ledit temps prédéterminé. Si le décodeur fonctionne plus vite que la vitesse seuil, il décode les données codées d'une image plus vite que ne le nécessite le séquencement des opérations du circuit, c'est à dire qu'il acyle de l'avance. On notera que les données décodées sont classiquement stockées dans une mémoire tampon avant d'être utilisées. Si le décodeur fonctionne moins vite que la vitesse seuil, il n'accumule plus d'avance et il peut perdre progressivement l'avance qui a pu être accumulée au préalable, ce qui peut éventuellement entraîner un dysfonctionnement du circuit. Selon la présente invention, on utilise un décodeur qui peut fonctionner à une vitesse maximale supérieure à la vitesse seuil. Le décodeur 4 est cadencé à cadence fixe par le signal d'horloge CK, et la vitesse de fonctionnement du décodeur se mesure par le nombre de cycles d'horloge CK durant lesquels le décodeur est utilisé, lors d'une période de référence prédéterminée de T cycles.

On peut évaluer si le décodeur est utilisé ou non lors d'un cycle de l'horloge CK en observant un signal particulier d'un bloc interne (PIPE) du décodeur, correspondant à l'état du décodeur : actif (signal à 1) ou inactif (signal à 0). Si le signal observé a la valeur 0 lorsque le décodeur est inutilisé, le moyen 20 est par exemple une porte ET dont une entrée est reliée au signal observé inversé et dont une deuxième entrée reçoit l'horloge CK. La sortie de cette porte ET est reliée au compteur 22 de manière à incrémenter le compteur 22 pour chaque cycle durant lequel le décodeur est inutilisé : le contenu NB du compteur croît ainsi d'autant plus que le décodeur est peu utilisé. Au début du décodage de chaque image, le compteur 22 est initialisé à une valeur négative égale à la valeur seuil TV qui correspond, pour une période de référence T prédéterminée, au nombre de cycles de l'horloge CK pendant lequel le décodeur, s'il fonctionne à la vitesse seuil, est inutilisé. La machine d'état 28 est prévue pour, toutes les périodes de référence T, commander au soustracteur 26 de retrancher du contenu NB du compteur la valeur seuil TV. Ainsi, le contenu NB du compteur devient plus négatif, à chaque période de référence, s'il croît d'une valeur inférieure à la valeur seuil TV lors de la période de référence. Si le contenu NB du compteur est positif, le comparateur 24 active le signal de commande P fourni au circuit de commande 14, qui donne la priorité d'accès à la mémoire 12 au décodeur 4. Tant que le contenu NB du compteur est négatif, comme au début de chaque décodage d'image, le microprocesseur 6 a la priorité d'accès à la mémoire.

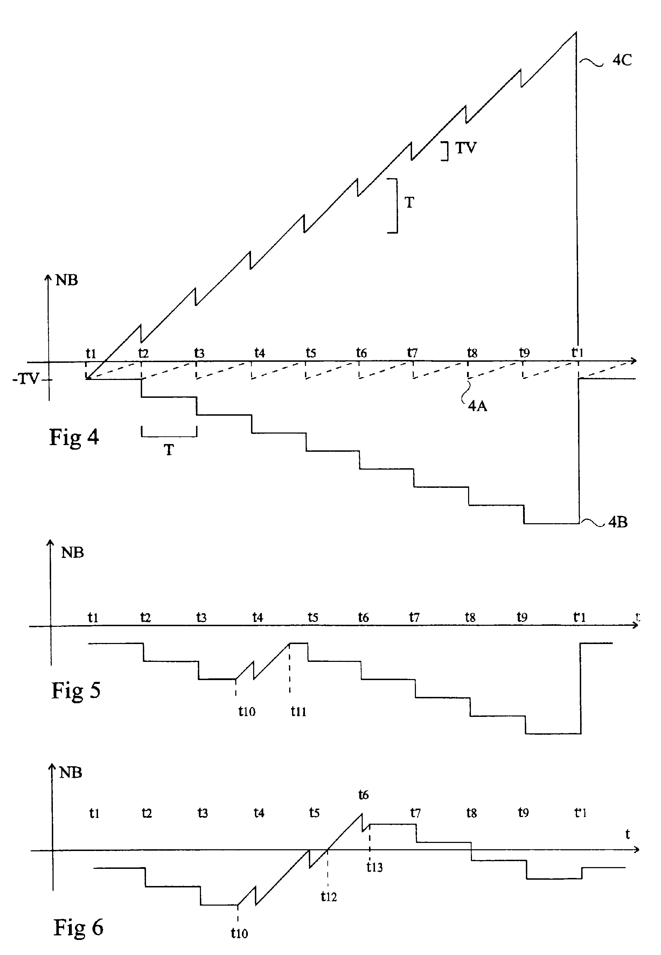

La figure 4 représente trois courbes 4A, 4B et 4C qui illustrent l'évolution du contenu NB du compteur 22 pour trois vitesses de fonctionnement différentes du décodeur 4, lors du décodage d'une image durant neuf périodes de référence T commençant en des instants t1 à t9. Pour des raisons de clarté, on a pris comme exemple un décodage d'images ne durant que neuf périodes de référence, mais on notera qu'en réalité, une image est décodée en environ 8000 périodes de référence, une période de référence T correspondant à environ 200 cycles d'horloge.

La courbe 4A illustre le cas théorique où le microprocesseur, qui a la priorité d'accès à la mémoire, fonctionne à une vitesse constante de manière que les données provenant de la mémoire permettent au décodeur 4 de fonctionner à la vitesse seuil, sans prendre d'avance ni de retard. Au début du décodage, à l'instant t1, le compteur 22 est initialisé à une valeur négative égale à la valeur seuil TV. Aux instants t2 à t9, la machine d'état 28 commande au soustracteur 26 de retrancher la valeur seuil TV du contenu NB du compteur. Le décodeur fonctionnant à la vitesse seuil, il est lors d'une période T inutilisé pendant un nombre de cycles égal au nombre TV. Ainsi le contenu du compteur 22 augmente de la valeur -TV jusqu'à 0 entre les instants t1 et t2, t2 et t3 et ainsi de suite selon une courbe en dents de scie. On a représenté un instant t1' qui correspond au début du décodage d'une image suivante. Le contenu NB du compteur est initialisé à la valeur -TV à l'instant t1'.

La courbe 4B illustre le cas théorique où le microprocesseur fonctionne à une vitesse suffisamment faible pour que les données provenant de la mémoire permettent au décodeur 4 de fonctionner à sa vitesse maximum. A l'instant t1, le contenu NB du compteur est initialisé à la valeur -TV. Le décodeur est utilisé lors de chaque cycle d'horloge et le contenu NB du compteur n'est ainsi jamais incrémenté et décroît par paliers de valeur TV aux instants t2 à t9. Le décodeur 4 fonctionne en accumulant de l'avance, et plus le contenu NB du compteur est négatif, plus cette avance est grande. On notera que la taille du compteur 22 doit être prévue pour compter jusqu'à un nombre négatif égal à n fois TV où n est le nombre de périodes de référence T nécessaire pour traiter une image (ici 9). À l'instant t1', au début du décodage d'une image suivante, le contenu NB du compteur 22 est réinitialisé à la valeur -TV.

La courbe 4C illustre un cas théorique où le microprocesseur fonctionnerait continûment à une vitesse suffisamment élevée pour que le décodeur ne reçoive aucune donnée. Une telle courbe ne fait pas intervenir le changement de priorité d'accès à la mémoire selon la présente invention et elle ne peut correspondre à un fonctionnement réel. Cette courbe n'est donnée que pour faciliter la compréhension des figures qui suivent. Aux instants t1 et t1', le contenu NB du compteur est initialisé à la valeur - TV et la valeur TV est retranchée du contenu NB du compteur aux instants t2 à t9. Le décodeur est inutilisé et le contenu NB du compteur est incrémenté pour chaque cycle de l'horloge CK. Le contenu NB du compteur croît ainsi de la valeur T durant chaque période de référence T, entre les instants et t2, t2 et t3, et ainsi de suite. Le décodeur 4 fonctionne ici en accumulant du retard ; plus le contenu NB du compteur est positif, plus le retard accumulé est élevé.

Pour des raisons de clarté, on a représenté les décodages des figures 4A, 4B et 4C comme ayant la même durée. En réalité, les décodages effectués avec les vitesses les plus élevées seront plus courts.

La figure 5 illustre à l'aide des mêmes références que la figure 4 le fonctionnement du compteur 22 lorsque le décodeur 4 commence par prendre de l'avance sur un décodage, puis perd cette avance sans toutefois déclencher le changement de priorité d'accès à la mémoire selon la présente invention. Entre l'instant et un instant t10, situé entre les instants t3 et t4, l'activité du microprocesseur est faible et le décodeur fonctionne à une vitesse maximale. Jusqu'à l'instant t10, le contenu NB du compteur décroît par paliers de valeur TV avec une période T et le décodeur 4 prend de l'avance. À l'instant t10, l'activité du microprocesseur, qui a la priorité d'accès à la mémoire, augmente de manière que le décodeur soit inutilisé durant chaque cycle. Ainsi, à partir de l'instant t10, le compteur 22 est incrémenté à chaque cycle d'horloge et le décodeur perd progressivement l'avance accumulée. À l'instant t4, le contenu NB du compteur est normalement décrémenté de la valeur TV, puis il continue de croître jusqu'à un instant t11 compris entre les instants t4 et t5. À l'instant t11, le pic d'activité du microprocesseur cesse, de manière que le décodeur puisse de nouveau fonctionner à vitesse maximale et rattraper le retard pris. A partir de l'instant t11, le contenu NB du compteur décroît ainsi par paliers de valeur TV aux instants t5 à t9.

L'instant t11 est dans cet exemple tel que le compteur 22 n'a pas atteint une valeur supérieure à 0 à l'instant t11. Selon la présente invention, tant que le contenu NB du compteur ne devient pas positif, le décodeur conserve une avance suffisante sur le décodage, et il n'est pas nécessaire de changer la priorité d'accès à la mémoire.

La figure 6 illustre à l'aide des mêmes références que la figure 5 un cas où le décodeur 4 commence par prendre de l'avance sur un décodage, puis perd cette avance et déclenche le changement de priorité d'accès à la mémoire selon la présente invention. L'activité du microprocesseur est faible entre les instants t1 et t10 de manière que le décodeur fonctionne à une vitesse maximale. Le contenu NB du compteur décroît par paliers de valeur TV aux instants t1 à t3. À l'instant t10, l'activité du microprocesseur augmente de manière que le décodeur soit inutilisé durant chaque cycle. Le compteur 22 est incrémenté à chaque cycle d'horloge à partir de l'instant t10 et le contenu NB du compteur croît jusqu'à l'instant t4, où la valeur TV lui est retranchée. Le contenu NB du compteur continue de croître jusqu'à l'instant t5, où la valeur seuil TV lui est de nouveau retranchée, puis il continue de croître jusqu'à un instant t12 où il devient positif. À l'instant t12, le comparateur 24 détecte que le contenu NB du compteur est positif et il commande au circuit de commande 14 d'attribuer au décodeur 4 la priorité d'accès à la mémoire. Classiquement, le décodeur 4 réagit avec une certaine latence, qui correspond notamment au temps nécessaire pour renouveler le contenu des tampons de mémoire du décodeur. Dans l'exemple représenté, bien que le décodeur 4 reçoive la priorité d'accès à la mémoire à l'instant t12, l'effet de ce changement se fait ressentir sur le décodage qu'à un instant t13 pris entre les instants t6 et t7. Ainsi, le contenu NB du compteur continue de croître de l'instant t12 à l'instant t6, se voit retrancher la valeur TV à l'instant t6, puis croît de l'instant t6 jusqu'à l'instant t13. A partir de l'instant t13, le décodeur 4, prend la priorité d'accès à la mémoire et il fonctionne avec un débit de données maximum. Le contenu NB du compteur se met alors à décroître par paliers de valeur TV aux instants t7 à t9. On notera que, dans l'exemple représenté, le contenu NB du compteur redevient négatif à partir de l'instant t8. La priorité d'accès à la mémoire est alors rendue au microprocesseur. On suppose que l'activité du microprocesseur à l'instant t8 est redevenue suffisamment faible pour permettre au décodeur 4 de fonctionner sans prendre du retard, bien que le microprocesseur ait de nouveau la priorité d'accès à la mémoire. Dans le cas contraire, le contenu NB du compteur aurait recommencé à croître à partir de l'instant t8 jusqu'à redevenir positif et à faire attribuer de nouveau au décodeur la priorité d'accès à la mémoire.

La détermination de la valeur seuil TV peut se faire par différence entre la vitesse maximale et la vitesse du décodeur 4. Par exemple, si l'on utilise un décodeur pouvant fonctionner à 63 MHz qui doit fonctionner à une vitesse seuil de 55 MHz, le décodeur sera inutilisé pendant 11,5 % des cycles d'horloge d'une période de référence lorsqu'il fonctionnera à la vitesse seuil. Cela équivaut à fixer la valeur seuil TV à 23 pour une période de référence T de 200 cycles.

Un avantage de la présente invention est que le compteur 22 compte les cycles pendant lesquels le décodeur est inutilisé, qui sont moins nombreux que les cycles pendant lesquels le décodeur est utilisé. Le compteur 22 est ainsi de taille réduite. D'autre part, comme on soustrait la valeur TV au contenu du compteur 22, le comparateur 24 est un simple comparateur de signe, au lieu d'être un comparateur numérique complexe.

On notera que, selon la présente invention, on donne au décodeur la priorité d'accès à la mémoire systématiquement lorsque le contenu NB du compteur 22 devient positif, bien que l'activité du microprocesseur puisse être forte. Cela entraîne une dégradation temporaire des performances du microprocesseur, qui doit être opposée à la dégradation permanente de ses performances selon l'art antérieur. D'autre part, la présente invention permet de toujours effectuer le décodage des images dans des conditions optimales de fonctionnement.

Bien entendu, la présente invention est susceptible de diverses variantes et modifications qui apparaîtront à l'homme de l'art. Par exemple, certains des éléments du circuit 16 décrit précédemment peuvent être inclus dans un même circuit intégré, notamment les éléments 4, 14 et 18. De plus, on pourra appliquer la présente invention à un circuit dans lequel d'autres éléments que le décodeur MPEG et le microprocesseur se partagent l'accès à une même mémoire, ou à un circuit dans lequel le décodeur décode séquentiellement des images appartenant à des séquences différentes, pour répartir le temps de décodage entre les différentes images.

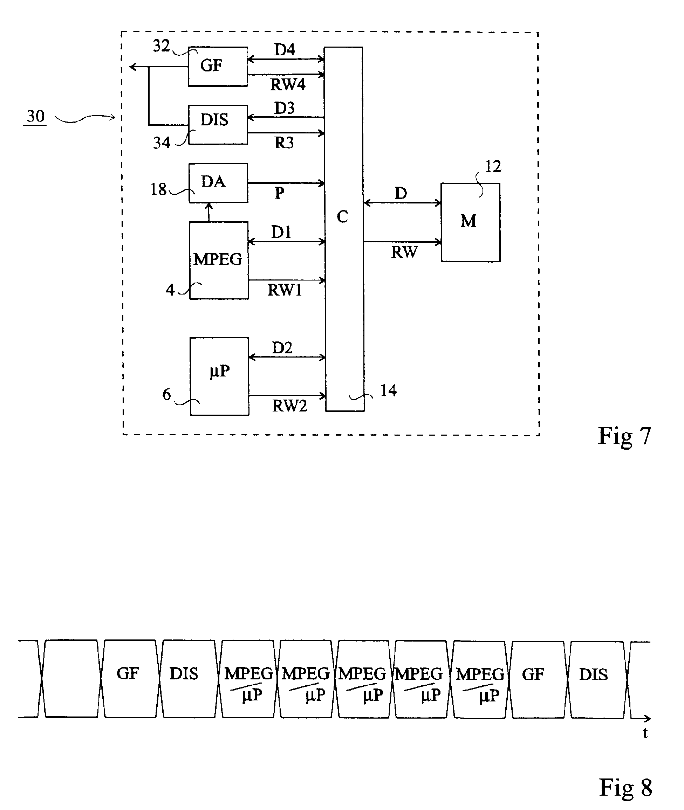

La figure 7 représente très schématiquement un circuit 30 qui comprend en plus des éléments représentés en figure 3 un circuit de gestion de fonctions graphiques 32 et un circuit de gestion d'affichage 34. Le décodeur 4 et le microprocesseur 6 sont reliés à la mémoire 12 par l'intermédiaire du circuit de commande 14, comme cela a été décrit précédemment. Le circuit de gestion de fonctions graphiques 32 est connecté pour lire ou écrire des données dans la mémoire 12 par l'intermédiaire d'un bus D4 relié au circuit de commande 14, et le circuit d'affichage 34 est connecté pour lire des données dans la mémoire 12 par l'intermédiaire d'un bus D3 relié au circuit de commande 14. Des signaux de commande R3 et RW4 sont fournis respectivement par les circuits 34 et 32 au circuit de commande 14.

Si l'on considère que les circuits 32 et 34 ont une activité connue régulière, on peut envisager que le circuit de commande 14 comprend une machine d'état (non représentée) capable d'arbitrer l'accès à la mémoire de ces blocs en plus du décodeur MPEG et du microprocesseur. Un type d'arbitrage, pour illustration, est la division du temps en plages d'accès à la mémoire 12. Un premier nombre prédéterminé de plages d'accès est attribué aux circuits 32 et 34 et un second nombre prédéterminé de périodes d'accès est attribué à la fois au microprocesseur et au décodeur, puis ces périodes d'accès sont réparties entre le microprocesseur et le décodeur par le circuit d'évaluation de retard 18.

La figure 8 illustre très schématiquement une telle segmentation du temps en plages d'accès à la mémoire 12. Une première plage d'accès est attribuée au circuit de gestion de fonction graphique, une deuxième plage est attribuée au circuit d'affichage puis cinq plages suivantes sont attribuées indifféremment au décodeur ou au microprocesseur. La plage qui suit sera attribuée au circuit de gestion de fonction graphique et ainsi de suite.

## Revendications

1. Circuit (16) comprenant un microprocesseur (6), un décodeur MPEG (4) pour décoder une suite d'images et une mémoire (12) commue au microprocesseur et au décodeur, caractérisé en ce qu'il comprend :
un circuit (18) d'évaluation du retard du décodeur,
un circuit de commande (14) pour, si le retard du décodeur est supérieur à un niveau prédéterminé, donner au décodeur la priorité d'accès à la mémoire sinon, donner au microprocesseur la priorité d'accès à la mémoire.

2. Circuit selon la revendication 1, comprenant une horloge (CK), des moyens pour fixer une période de référence (T) égale à un nombre déterminé de cycles d'horloge, des moyens pour fixer un seuil d'activité (TV), caractérisé en ce que le circuit d'évaluation du retard du décodeur comprend :
un moyen (20) pour déterminer pendant chaque cycle d'horloge si le décodeur est utilisé ou inutilisé,
un compteur (22) dont le contenu est incrémenté chaque fois que le décodeur est inutilisé pendant un cycle,
un soustracteur (26) qui, au début de chaque période de référence, retranche ledit seuil (TV) du contenu (NB) du compteur, et
un comparateur (24) pour vérifier que le contenu du compteur reste négatif, la sortie de ce comparateur étant fournie au circuit de commande.

3. Circuit selon la revendication 1 ou 2, comprenant en outre des circuits supplémentaires (32, 34) qui utilisent la mémoire (12) par l'intermédiaire du circuit de commande (14) avec une activité prédéterminée, dans lequel le circuit de commande est prévu pour donner l'accès à la mémoire alternativement aux circuits supplémentaires puis au microprocesseur (6) et au décodeur (4), l'accès à la mémoire par le microprocesseur et le décodeur étant réglé par la commande (P) produite par le circuit d'évaluation (18).
